# EUROPÄISCHE PATENTSCHRIFT

(11) **EP 0 958 535 B1**
(45) Veröffentlichungstag und Bekanntmachung des Hinweises auf die Patenterteilung: **09.10.2002**
(21) Anmeldenummer: 98901243.0
(22) Anmeldetag: 05.02.1998
(51) Int. Cl.: G06F 3/02

(54) **VERKLEINERBARE TASTATUR**
KEYBOARD WHICH CAN BE REDUCED IN SIZE
CLAVIER REDUCTIBLE

(30) Priorität: 06.02.1997 AT 18697
(43) Veröffentlichungstag der Anmeldung: 24.11.1999
(73) Patentinhaber: Unterluggauer, Peter, 9020 Klagenfurt (AT)
(72) Erfinder: Unterluggauer, Peter, 9020 Klagenfurt (AT)
(86) Internationale Anmeldenummer: AT9800025
(87) Internationale Veröffentlichungsnummer: WO98035288

(56) Entgegenhaltungen:
- US-A- 5 575 576

## Beschreibung

Die vorliegende Erfindung bezieht sich auf eine verkleinerbare Tastatur, insbesondere für elektronische Geräte, Computer, Klein-Computer oder dgl., entsprechend dem einleitenden Teil des Anspruches 1.

Eine derartige Tastatur ist aus der US 5.575.576 A bekannt, wobei bei dieser Druckschrift im Prinzip vorgeschlagen wird, die Tasten pilzförmig auszubilden und die in zwei Teile teilbare Tastatur in der verkleinerten Position so ineinander zu schachteln, daß die Pilzkopfe der einen Tastaturhälfte in die Bereiche der Tastenstiele der anderen Tastaturhälfte zu liegen kommen. In einer Ausgestaltung ist vorgesehen, daß die Böden der beiden Tastaturteile so durchlöchert sind, daß man die Tastaturteile im verkleinerten Zustand, ähnlich wie eine Harfe, von beiden Seiten aber blind bedienen kann.

In einer Ausgestaltung, in der die Tasten auch in der verkleinerten Position gleichgerichtet angeordnet sind, ist vorgesehen, die Tasten achteckig auszubilden und die Tasten einer der Tastaturhälften in die zwischen vier im Quadrat angeordneten Tasten der anderen Tastaturhälfte einzufügen. Es kommt bei dieser Anordnung dazu, daß die einzelnen Zeilen bzw. Spalten von Tasten in Zickzack-Anordnung vorliegen und einen Normalbetrieb in der verkleinerten Position unmöglich machen. Dazu kommt als weiterer Nachteil, daß auch in der vergrößerten Position dieser vorbekannten Tastatur keine Tasteobelegung vorliegt, die der Standardtastatur entspricht, da die Zeilen und Spalten der Tastatur rechtwinkelig zueinander angeordnete Gerade bilden, um zwischen jeweils vier im Quadrat angeordneten Tasten den benötigten Freiraum zu bilden.

Bei der Miniaturisierung von Computern, beispielsweise Taschencomputern, Notebooks oder dgl., ist neben einer für eine entsprechende Benutzbarkeit erforderlichen Mindestgröße eines Bildschirms eine weitere Grenze bei der Herabsetzung der Gesamtabmessungen eines derartigen Computers zumeist die für ein Handhabbarkeit und Bedienbarkeit vorzusehende Mindestgröße der Tastatur, welche eine Limitierung einer fortschreitenden Verkleinerung bzw. Miniaturisierung derartiger Geräte darstellt. Im Zusammenhang mit einer Verkleinerung der Tastatur ist hiebei davon auszugehen, daß die Tastengröße und insbesondere der Tastenabstand benachbarter Tasten einer Tastatur nicht unter ein gewisses Mindestmaß verringert werden können, da gegebenenfalls derart kleine Tasten nur mit entsprechend komplizierten Zusatzgeräten, wie beispielsweise stiftartigen Bedienungselementen, bedienbar wären und somit ein normaler Einsatz einer Tastatur für Schreibzwecke keinesfalls mehr möglich ist.

Im Zusammenhang mit der Verkleinerung von Tastaturen, zumindest im Transportzustand, sind unterschiedliche Vorschläge bekannt geworden. So ist beispielsweise der WO 92/18926 eine Tastatur, insbesondere für Schreibmaschinen, Computer oder dgl., zu entnehmen, wobei ein in einem Gehäuserahmen angeordnetes Tastenfeld sowie der Gehäuserahmen selbst quer zur Längsachse des Gehäuserahmens in mindestens zwei Gehäuserahmen- und Tastenfeldabschnitte unterteilt sind, wobei die einzelnen Abschnitte des Gehäuserahmens und des Tastenfeldes unmittelbar nebeneinander oder in Abstand voneinander angoordnet werden können, um derart bei verringerten Abmessungen in der Transportposition dennoch eine ausreichend große und bedienerfreundliche Tastatur im Einsatzfall zur Verfügung stellen zu können.

In ähnlicher Weise ist aus der US-PS 3 940 758 eine abgewandelte Form einer zusammenklappbaren Tastatur bekannt geworden, wobei einzelne Tastaturabschnitte gelenkig miteinander verbunden sind, wobei in einem Transportzustand die einzelnen, schwenkbar aneinander angelenkten Tastaturteilen übereinander gestapelt werden können. Nachteilig bei diesen Ausführungsformen sind unter anderem die im Transportzustand üblicherweise erforderlichen, großen Höhen der zusammengeklappten bzw. übereinander angeordneten Tastaturelemente und die Tatsache, daß die Tastatur ausschließlich in der ausgeklappten Position verwendbar ist.

Um einer derartigen Vergrößerung der Höhe der Tastatur im Transportzustand entgegenzuwirken und zumindest im Transportzustand eine gegenüber der Benutzung verringerte Breite der Tastatur zu ermöglichen, ist beispielsweise in der US-PS 5 543 787 vorgeschlagen worden, eine Tastatur eines Notebooks oder dgl. im wesentlichen, diagonal zu teilen und die einzelnen Teile in der Transportstellung relativ zueinander im sinne einer Verringerung der Breite bei gleichzeitiger Vergrößerung der Abmessungen normal hiezu zu verschieben.

Weitere abgewandelte Ausführungen von bekannten Tastaturen, bei welchen auf eine Verringerung der Breite in der Transportstellung abgezielt wird, sind darüberhinaus beispielsweise der US-PS 5 141 343 und der US-PS 5 163 765 zu entnehmen. Hiebei sind bei der erstgenannten Literaturstelle die einzelnen Tasten an einer scherengitterartigen, mechanischen Struktur festgelegt, welche für eine Gebrauchsstellung eine Teleskopierbarkeit der Tastatur zumindest in der Richtung der Breite der Tastatur ermöglicht. Gemäß der US-PS 5 163 765 wird dagegen vorgeschlagen, zwischen den einzelnen Tasten elastomere Bereiche vorzusehen, sodaß die Tastatur von der Gebrauchsstellung in eine Transportstellung zusammengeschoben und somit in ihrer Breite verkleinert werden kann. Bei diesen letztgenannten bekannten Tastaturen ist jedoch nachteilig, daß sie eine überaus aufwendige und komplizierte Konstruktion für die Lagerung der einzelnen Tasten erforderlich machen.

Die vorliegende Erfindung setzt sich daher ausgehend von einer Ausbildung der eingangs genannten Art zum Ziel, eine verkleinerbare Tastatur, insbesondere für elektronische Geräte. Computer, Kleincomputer oder dgl., zu schaffen, welche einfach und kostengünstig hergestellt werden kann und einen optimalen Bedienungskomfort bietet. Dabei soll eine weitere Miniaturisierung der Geräte bei Aufrechterhaltung einer größtmöglichen Benutzerfreundlichkeit, insbesondere für die Bedienung der Tastatur, erhalten werden, wobei insbesondere darauf abgezielt wird, daß bei geringstmöglichem Platzbedarf bezogen auf die Länge, Breite, und/oder Höhe in der Transportstellung in der ausgefahrenen Position der Tastatur die Abstände zwischen den einzelnen Tasten und die Funktionsweise der Tastatur im wesentlichen denjenigen einer Standardtastatur entsprechen.

Zur Lösung dieser Aufgabe ist eine eingangs definierte Tastatur mit den im kennzeichnenden Teil des Anspruches 1 angegebenen Merkmalen versehen.

Unter "Kontakten" werden in dieser Beschreibung sämtliche Verbindungsmöglichkeiten zwischen den Tasten eines Trägerelements bzw. gegebenenfalls den Steuerelementen des Trägerelements bzw. den Schnittstellen des Trägerelements bzw. den Steuerelementen der Tastatur bzw. den Schnittstellen der Tastatur zum Zwecke der Energie-, Signal- bzw. Datenübertragung verstanden, wobei auch beispielsweise eine Übertragung mittels Leiterbahnen, Drähten, drahtlos, per Funkt etc. umfaßt ist.

Unabhängig von der relativen Lage der einzelnen Trägerelemente zueinander ist darüberhinaus jeweils eine definierte Zuordnung der Tasten bzw. der Belegung der Tasten über die vorgesehenen Trägerelemente zur Abstützung und Halterung der Tasten möglich, wofür erfindungsgemäß weiters vorgesehen ist, daß die Trägerelemente Kontakte für die einzelnen Tasten bzw. darin integrierte Tasten aufweisen. Die Tasten können somit erfindungsgemäß Einzelelemente sein, welche auf einem Trägerelement befestigt sind, oder beispielsweise bei einer Folientastatur unmittelbar in ein Trägerelement integriert sein. Dadurch, daß erfindungsgemäß weiters vorgeschlagen wird, daß die Trägerelemente mit den darauf angeordneten Tasten in der vergrößerten Position der Tastatur nebeneinander und/oder voneinander getrennt anordenbar sind, läßt sich ausgehend von einer einen sehr geringen Platzbedarf beanspruchenden Transportstellung beispielsweise durch einfaches Verschieben und Verschwenken der Trägerelemente mit den darauf vorgesehen Tasten relativ zueinander eine in bezug auf den gegenseitigen Abstand der Tasten sowie auf die Funktionsweise einer Standardtastatur entsprechende Tastatur im Betriebszustand bzw. der vergrößerten Position erzielen. Aus ergonomischen Gründen können die Trägerelemente in der vergrößerten Position beispielsweise auch unter einem Winkel zueinander angeordnet oder durch Füße oder Abstützungen im mittleren Bereich angehoben werden, um entsprechend schräg gestellte Tastaturbereiche zu erhalten. Hiebei kann erfindungsgemäß in einfacher Weise vorgesehen sein, daß im verkleinerten Zustand die wenigstens zwei Trägerelemente derart zusammengefügt werden, daß durch Verschachtelung der Trägerelemente jeweils zwischen zwei Spalten von Tasten des einen Trägerelementes wenigstens eine Spalte von Tasten eines anderen Trägerelementes aufgenommen wird. Naturgemäß kann die Aufteilung der an einem Trägerelement vorzusehenden Tasten auch zeilenweise erfolgen, sodaß zwischen Zeilen von Tasten eines Trägerelementes jeweils eine Zeile von Tasten eines anderen Trägerelementes in der verkleinerten Transportstellung vorgesehen ist.

Wie oben bereits angedeutet, kann in der verkleinerten und/oder vergrößerten Position der Tastatur unmittelbar eine mechanische Kopplung zwischen den einzelnen Trägerelementen vorgesehen sein, wobei in diesem Zusammenhang gemäß einer weiteren bevorzugten Ausführungsform vorgeschlagen wird, daß die Trägerelemente miteinander gelenkig und/oder über Gelenkstangen und/oder über drehbare Hebel und/ oder über eine ein teleskopierbares Element aufweisende Kopplung und/oder Steckverschlüsse verbindbar sind oder verbunden sind. Eine derartige gelenkige Verbindung oder eine Verbindung unter Verwendung von teleskopierbaren Elementen läßt sich in unterschiedlichsten Ausführungsformen entsprechend einfach und kostengünstig herstellen, wobei beispielsweise bei Verwendung einer Teleskopführung zwischen den einzelnen Trägerelementen auch ein entsprechend geringer Platzbedarf für die mechanische Kopplung notwendig ist.

Gemäß einer konstruktiv besonders einfachen Ausführungsform wird darüberhinaus erfindungsgemäß vorgeschlagen, daß wenigstens zwei Trägerelemente vorgesehen sind, welche miteinander entlang ihrer Längs- oder Breitseite über teleskopierbare, stangenartige Führungen verbunden sind und aus der verkleinerten Position der Tastatur durch ein Verschwenken der Trägerelemente relativ zueinander und ein Verschieben längs der Teleskopführungen in die vergrößerte Position verlagerbar sind. Durch eine derartige Kopplung der Trägerelemente entlang ihrer längs- oder Breitseite mittels teleskopierbarer, stangenartiger Führungen läßt sich eine Ausbildung erzielen, mit welcher die im ausgefahrenen Betriebszustand die Abmessungen einer Standardtastatur aufweisende Tastatur in der Transportstellung im wesentlichen auf die Hälfte, ein Drittel, usw. der Abmessungen einer Standardtastatur verkleinert werden kann, sodaß eine entsprechend kleine Transportstellung erzielbar ist. Hiebei kann beispielsweise bei mehr als zwei Trägerelementen in der verkleinerten Position eine Verschachtelung gewählt werden, bei welcher abwechselnd eine Taste des ersten, zweiten, dritten usw. Trägerelementes liegt, sodaß sich eine entsprechende Verringerung der Abmessungen der Tastatur im Transportzustand erzielen läßt. Dadurch, daß erfindungsgemäß die Trägerelemente in der Transportstellung jeweils zwischen benachbarte Spalten oder Zeilen eines Trägerelementes eingreifen, kann eine Ausbildung geschaffen werden, bei welcher die Gesamthöhe der Tastatur in Betriebsstellung und Transportstellung ident ist und somit im Gegensatz zu bekannten Konstruktionen, bei welchen ein Einklappen von Tastaturteilen eine entsprechende Vervielfachung der Höhe der Tastatur im Transportzustand mit sich bringt, erfindungsgemäß auch in der Transportstellung eine Tastatur mit unverändert geringer Höhe erzielt werden.

Für eine besonders einfache und sichere Kopplung der Trägerelemente in der verkleinerten und/oder vergrößerten Position ist darüberhinaus bevorzugt vorgesehen, daß Feststellmechanismen, wie Steckverbindungen, Schnappverschlüsse, Stecker oder dgl., vorgesehen sind. Für eine besonders einfache Fixierung der Tastatur im verkleinerten und/oder vergrößerten Zustand ist bevorzugt vorgesehen, daß ein- oder mehrpolige Stecker, die gleichzeitig für eine Enerige-, Signal- bzw. Datenübertragung zwischen den Trägerelementen sorgen, eingesetzt sind, wobei diese Stecker mittels Reibschluß und/oder federnder Steckerelemente die Trägerelelemente in beiden Zuständen fest verbinden.

Gemäß einer weiteren abgewandelten Ausführungsform ist erfindungsgemäß vorgesehen, daß wenigstens drei Trägerelemente vorgesehen sind, wobei an einem ein Grundelement bildenden, ersten Trägerelement zwei weitere Trägerelemente, deren Gesamtbreite maximal der Breite des Grundelements entspricht, angeordnet sind. Bei Vorsehen einer derartigen dreiteiligen Tastatur kann beispielsweise eine Ausbildung erzielt werden, bei welcher eine Vergrößerung eines Teilbereiches, beispielsweise lediglich des einen üblicherweise geringeren Platzbedarf aufweisenden Tastaturbereiches für Ziffern möglich ist, während der verbleibende Tastaturbereich für Schriftzeichen je nach gewünschtem Einsatzzweck auch beispielsweise in der verkleinerten Position belassen werden kann, wobei nur einfache und vorzugsweise selbsttätige Umschaltvorgänge für eine entsprechende Definierung der Belegung der Tasten erforderlich sind.

Wie oben ausgeführt, werden in der vergrößerten Stellung die Trägerelemente mit den darauf angeordneten Tasten nebeneinander und/oder voneinander getrennt angeordnet, wobei eine einfache Kopplung der einzelnen mit jeweils einem Teil der Tasten der gesamten Tastatur versehenen Trägerelemente vorzugsweise dadurch erzielt wird, daß die Trägerelemente für eine Energieund Signal- bzw. Datenübertagung miteinander, gegebenenfalls unter Zwischenschaltung von Steuerelementen, und/oder mit einer Steuereinheit gekoppelt sind. Es kann hiebei vorgesehen sein, daß die einzelnen Trägerelemente durch eine mechanische Kopplung miteinander verbunden sind, während naturgemäß auch vorgesehen sein kann, die einzelnen Trägerelemente im wesentlichen nebeneinander und voneinander getrennt anzuordnen, wobei für eine entsprechende Kopplung zur Energie- und Signal- bzw. Datenübertragung gesorgt sein muß. Die einzelnen Tasten bzw. Bauteile jedes Trägerelementes können hiebei mittels an sich bekannter Ausbildungen, wie beispielsweise Drähten, Leiterbahnen, Funk, Licht, Infrarot oder dgl., untereinander oder unmittelbar mit einer Steuereinheit bzw. der zugehörigen Rechnereinheit zum Zweck der Signal- bzw. Datenübertragung verbunden werden. Weiters können für die elektronische Datenübertragung zwischen den Tasten der Trägerelemente und der Steuereinheit bzw. dem Computer spezielle, an sich bekannte, elektronische Schaltungen in einer Form verwendet werden, daß die Anzahl der benötigten Verbindungskabel, insbesondere zwischen den Tastaturteilen, minimiert wird.

Für eine besonders einfache Kopplung der einzelnen Trägerelemente sowie der darauf angeordneten Tasten wird gemäß einer weiteren bevorzugten Ausführungsform vorgeschlagen, daß in Verbindungselementen oder Kopplungen der einzelnen Trägerelemente Einrichtungen zur Energie- und Signal- bzw. Datenübertragung integriert sind.

Betreffend die Definierung der Belegung der einzelnen Tasten wird darüberhinaus gemäß einer weiteren bevorzugten Ausführungsform vorgeschlagen, daß die Trägerelemente über einen Sensor, Kontakt oder Schalter miteinander gekoppelt sind, welcher entsprechend der relativen Positionierung der Trägerelemente der Tastatur eine Umdefinierung der Belegung der einzelnen Tasten bewirkt. Durch derartige Sensoren, Kontakte oder Schalter, welche entsprechend der relativen Positionierung der Trägerelemente eine Umdefinierung der Belegung der einzelnen Tasten bewirken, kann, wie dies oben angedeutet wurde, beispielsweise bei Verwendung eines Teilbereiches der Tastatur im Betriebszustand eine entsprechende Definierung der Belegung der einzelnen Tasten erzielt werden. Weiters kann durch eine derartige vorgesehende Umdefinierung der Tasten entsprechend der relativen Positionierung erzielt werden, daß die Tastatur sowohl in vergrößertem Zustand als auch im Transportzustand mit entsprechend geringerem Tastenabstand, beispielsweise für kurze Arbeiten, eingesetzt werden kann, wobei eine vorzugsweise selbsttätige Umdefinierung der Belegung der Tasten vorgenommen wird. Es ist somit bei der erfindungsgemäßen, verkleinerbaren Tastatur möglich, die Tastatur sowohl im ausgefahrenen Zustand als auch im Transportzustand mit verringerten Abmessungen bei geringfügig herabgesetztem Bedienungskomfort zu verwenden.

Für eine besonders einfache Kontaktierung der einzelnen Tasten sowie eine einfache übertragung der Daten auf bzw. zwischen den Trägerelementen wird weiters vorgeschlagen, daß die Tasten jedes Trägerelements mittels Leiterbahnen oder Drähten mit einem auf dem Trägerelement angeordneten, insbesondere als Multiplexer arbeitenden Mikrokontroller, der die Zustände der Tasten erfaßt und gegebenenfalls zwischenspeichert, verbunden sind und daß die Mikrokontroller jedes Trägerelementes insbesondere berührungslos an einen als Demultiplexer geschalteten, ortsfesten, zentralen Mikrokontroller angeschlossen sind, welcher über ein Interface an die Schnittstelle des Computers oder dgl. für die Tasteneingabe anschaltbar ist, wie dies einer weiteren bevorzugten Ausführungsform der Erfindung entspricht.

Wie oben bereits angedeutet, gelingt es mit der erfindungsgemäßen verkleinerbaren Tastatur, durch Vorsehen einer Mehrzahl von Trägerelementen, welche jeweils Spalten oder Zeilen einzelner Tasten aufweisen, welche in der verkleinerten Transportstellung ineinander verschachtelt bzw. zwischen benachbarten Spalten oder Zeilen eines weiteren Trägerelementes zu liegen kommen, eine verkleinerbare Tastatur zu schaffen, welche sowohl im Transportzustand als auch im Betriebszustand eine im wesentlichen unverändert geringe Höhe aufweist. Für eine optimale Ausnutzung des Abstandes zwischen benachbarten Tasten sowohl im Transportzustand als auch im Betriebszustand sowie zur Ermöglichung eines Einsatzes maximaler Tastengrößen wird darüberhinaus bevorzugt vorgeschlagen, daß die Abmessungen der einzelnen Tasten bzw. Supportteile der Trägerelemente unter den Tasten geringer sind als der durch die Anzahl der Trägerelemente dividierte Abstand zwischen den Mittelpunkten der Tasten eines Trägerelementes.

Für eine konstruktiv besonders einfache und stabile Ausgestaltung ist vorgesehen, daß eines der Trägerelemente fest mit einem Gehäuse für die Tastatur oder dem damit verbundenen Computer oder dgl. verbunden ist bzw. darin integriert ist, wie dies einer weiteren bevorzugten Ausführungsform der erfindungsgemäßen, verkleinerbaren Tastatur entspricht.

Die Erfindung wird nachfolgend anhand von in der beiliegenden Zeichnung schematisch dargestellten Ausführungsbeispielen näher erläutert. In dieser zeigen:
Fig. 1 eine perspektivische Ansicht einer ersten Ausführungsform eines mit einer erfindungsgemäßen, verkleinerbaren Tastatur ausgestatteten Computers, wobei die Tastatur in der Transportstellung dargestellt ist;
Fig. 2 ebenfalls in perspektivischer Darstellung einen Zwischenschritt bei der Umstellung der Tastatur von der Transportstellung in die Betriebsstellung;
Fig. 3 die in den Fig. 1 und 2 gezeigte, erfindungsgemäße, verkleinerbare Tastatur in der Betriebsstellung;
Fig. 4 eine schematische Draufsicht auf eine abgewandelte Ausführungsform einer erfindungsgemäßen, verkleinerbaren Tastatur, wobei drei Trägerelemente vorgesehen sind;
Fig. 5 in einer zu Fig. 4 ähnlichen, schematischen Darstellung eine weitere abgewandelte Ausführungsform einer erfindungsgemäßen, verkleinerbaren Tastatur, beispielsweise für einen Taschenrechner oder ein Mobiltelefon, wobei die einzelnen Trägerelemente jeweils einzelne Zeilen von Tasten der Tastatur aufweisen;
Fig. 6 eine schematische Draufsicht auf eine weitere abgewandelte Ausführungsform einer erfindungsgemäßen, verkleinerbaren Tastatur, wobei eine Vergrößerung der Abmessungen der Tastatur in der Betriebsstellung nicht nur spaltenweise, sondern auch zeilenweise erfolgt;
Fig. 7 eine Draufsicht auf eine weitere abgewandelte Ausführungsform der erfindungsgemäßen, verkleinerbaren Tastatur in der vergrößerten Position;
Fig. 8 eine Vorderansicht einer weiteren abgewandelten Ausführungsform der erfindungsgemäßen, verkleinerbaren Tastatur in der vergrößerten Position;
Fig. 9 einen Teilschnitt durch Trägerelemente sowie darauf angeordnete Tasten einer weiteren abgewandelten Ausführungsform der erfindungsgemäßen, verkleinerbaren Tastatur; und
Fig. 10 eine schematische Ansicht einer weiteren abgewandelten Ausführungsform einer erfindungsgemäßen Tastatur, wobei drei jeweils Spalten einer Tastatur aufweisende Trägerelemente in der verkleinerten Position ineinander verschachtelt sind.

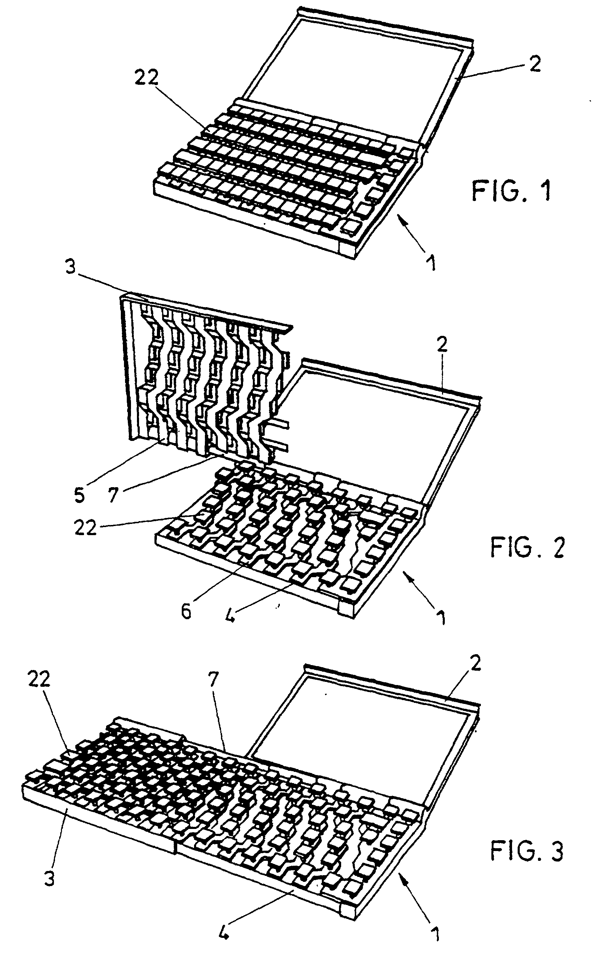

Bei der Ausführungsform gemäß den Fig. 1 bis 3 ist allgemein mit 1 ein Gehäuse für eine Tastatur bezeichnet, wobei an das Gehäuse 1, welches naturgemäß entsprechende Bauteile nicht nur als Anschlüsse für die Tastatur, sondern auch für den Rechner aufweisen kann, schwenkbar ein mit 2 bezeichneter Bildschirm angeschlossen ist.

Hiebei ist in Fig. 1 die Transportstellung dargestellt, während in Fig. 2 ein zwischenschritt bei der Überführung der Tastatur von der Transportstellung in eine einer Standardtastatur im wesentlichen entsprechende Bedienungsstellung, welche in Fig. 3 gezeigt ist, ersichtlich ist. Insbesondere aus der Darstellung gemäß Fig. 2 kann ersehen werden, daß zwei Trägerelemente 3 und 4 vorgesehen sind, wobei an diesen Trägerelementen bei der Ausbildung gemäß den Fig. 1 bis 3 jeweils eine spaltenweise Unterteilung der gesamten Tastatur derart erfolgt, daß in der in Fig. 1 dargestellten Position verschachtelt zwischen jeweils benachbarten Spalten eines Trägerelementes eine Spalte des jeweils anderen Trägerelementes mit den darauf angeordneten Tasten zu liegen kommt. Wie ebenfalls in den Fig. 2 und 3 angedeutet, bestehen die Trägerelemente aus einem Support und Anschluß für die einzelnen Tasten 22 bildenden Stege bzw. Supportteile 5 und 6. Es ist ersichtlich, daß hiebei die Abmessungen der Tasten 22 sowie der entsprechenden, den einzelnen Tasten zugrundeliegenden Supportteile 5 und 6 derart gewählt sind, daß in der in Fig. 1 gezeigten, verkleinerten Transportstellung die einzelnen Tasten 22 im wesentlichen unmittelbar nebeneinander liegen, wobei darüberhinaus die jeweils an den äußeren Rändern der einzelnen Trägerelemente 3 bzw. 4 angeordneten Tastenspalten fix angeordnet sind und spezielle, zusätzliche, nicht dargestellte Elemente enthalten können.

Bei der Ausbildung gemäß den Fig. 1 bis 3 erfolgt eine einfache Umwandlung bzw. Verstellung von der in Fig. 1 dargestellten Transportstellung mit verringerter Breite in die in Fig. 3 dargestellte Betriebsposition entsprechend einer Standardtastatur dadurch, daß das Trägerelement 3 relativ zum Trägerelement 4 bzw. zum Gehäuse 1 verschwenkt wird, wie dies in Fig. 2 dargestellt ist, und längs einer teleskopierbaren, stangenartigen Führung 7 relativ zum Trägerelement 4 verschoben wird und in der ausgezogenen Position wiederum in die Ebene des Trägerelementes 4 bzw. des Gehäuses 1 geklappt wird. Durch Vorsehen von entsprechenden Sensoren, Schaltern oder Kontakten, welche beispielsweise unmittelbar im Bereich der teleskopierbaren Führung 7 integriert sein können, kann darüberhinaus dafür Sorge getragen werden, daß sowohl in der in Fig. 1 dargestellten Transportstellung als auch in der in Fig. 3 dargestellten Stellung entsprechend einer Standardtastatur eine Verwendung der Tastatur erfolgen kann, wobei naturgemäß durch die spaltenweise Verschachtelung der einzelnen Tasten 22 im Transportzustand eine entsprechende Neudefinierung der Belegung der Trägerelemente 3 und 4 sowie der einzelnen Tasten vorzusehen ist. Die Verwendung der Tastatur in der in Fig. 1 dargestellten Transportstellung kann hiebei beispielsweise für Kurzarbeiten sinnvoll und zielführend sein, in welchen nicht unbedingt die verbesserte Handhabbarkeit bei Ausbildung der in Fig. 3 dargestellten Standardtastatur erforderlich ist.

Weiters kann unmittelbar in die Teleskopführung 7 die elektrische oder elektronische Kopplung zur Energie- und Signal- bzw. Datenübertragung zwischen den einzelnen Trägerelementen 3 und 4 unabhängig von der relativen Positionierung der Tasten 22 vorgesehen sein.

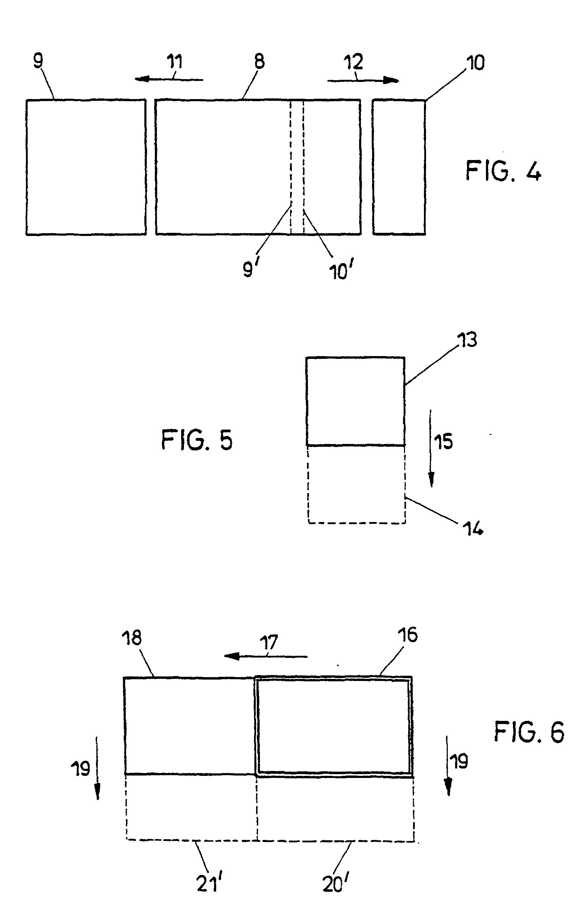

Bei der schematischen Darstellung gemäß Fig. 4, einer Draufsicht auf eine abgewandelte Ausführungsform einer Tastatur, ist ein in einem Gehäuse vorzusehendes, erstes Trägerelement mit 8 bezeichnet, wobei in der mit vollen Linien dargestellten, vergrößerten Stellung der Tastatur ersichtlich ist, daß auf beiden Seiten des ersten Trägerelementes 8 weitere Trägerelemente 9 und 10 angeordnet sind, wobei die einzelnen Tasten der Trägerelemente 8, 9 und 10 der Einfachheit halber nicht dargestellt sind. Für die in Fig. 4 dargestellte, ausgefahrene bzw. verbreiterte Position der Tastatur erfolgt eine Verlagerung der Trägerelemente 9 und 10 im Sinn der Pfeile 11 und 12, wobei die verschachtelte Positionierung der Trägerelemente 9 und 10 am Trägerelement 8 in der Transportstellung schematisch durch die strichlierten Begrenzungslinien 9' und 10' angedeutet ist. Auch bei dieser Ausführungsform erfolgt wiederum eine spaltenweise Auftrennung der Trägerelemente ähnlich der Ausführungsform der Fig. 1 bis 3. Wie in Fig. 4 angedeutet, können hiebei die einzelnen Trägerelemente 8, 9 und 10 in der Gebrauchsstellung derart voneinander entkoppelt werden, daß eine unmittelbare mechanische Verbindung zwischen den einzelnen Tastaturteilen 8, 9 und 10 nicht unbedingt erforderlich ist, wobei naturgemäß für eine entsprechende Signal- und Datenübertragung zwischen den einzelnen Tastaturteilen 8, 9 und 10 bzw. unmittelbar mit der nicht dargestellten Rechnereinheit Sorge getragen werden muß. Weiters kann bei Verwendung des Tastaturabschnittes 10, welcher beispielsweise nur Ziffern enthält, lediglich ein Teilbereich der Tastatur in ausgefahrenem Zustand verwendet werden, während der verbleibende, nicht ausgefahrene Tastaturbereich 9' durch eine geeignete Schaltung inaktiviert bleibt.

Bei der abgewandelten Ausführungsform gemäß Fig. 5 ist neben einem in einem Gehäuse ähnlich der Ausbildung gemäß den Fig. 1 bis 3 angeordneten, ersten Trägerelement 13 ein zweites, in der Betriebsstellung strichliert mit 14 angedeutetes Trägerelement angeordnet, wobei bei dieser Ausbildung abweichend von den Ausführungen gemäß den Fig. 1 bis 4 eine zeilenweise Unterteilung der Tastatur erfolgt und somit eine Vergrößerung der Tastatur im Betriebszustand entsprechend dem Pfeil 15 vorgenommen wird. Eine derartige Ausbildung kann beispielsweise bei einem Taschenrechner oder Mobiltelefon Verwendung finden, wodurch für eine im wesentlichen lediglich numerische Tastatur, gegebenenfalls mit wenigen Zusatztasten, eine entsprechend kleine Transportstellung erzielbar ist. Bei dieser Darstellung sind ebenfalls der Einfachheit halber die einzelnen Tasten sowie die darunterliegenden Supportteile der Trägerelemente, welche ähnlich der Ausbildung gemäß den Fig. 1 bis 3 ausgebildet sein können, nicht dargestellt.

In Fig. 6 ist eine Möglichkeit einer weiteren Miniaturisierung einer Tastatur dargestellt, wobei ein in einem Gehäuseelement gelagertes und schematisch mit 16 bezeichnetes, erstes Trägerelement ähnlich der Ausbildung gemäß den Fig. 1 bis 3 durch eine Verbreiterung im Sinne des Pfeiles 17 mit einem Trägerelement 18 zusammenwirkt. Neben einer derartigen spaltenweisen Verbreiterung ist in dieser Ausführungsform zusätzlich noch ähnlich der Ausbildung gemäß Fig. 5 eine weitere zeilenweise Verbreiterung entsprechend den Pfeil 19 in die zusätzliche, strichliert angedeutete Position weiterer Trägerelemente 20' und 21' möglich, sodaß ausgehend von einer extrem kleinen Transportstellung bei Vorsehen von entsprechend kleinen Tasten und Supportteilen der einzelnen Trägerelemente 16, 18, 20 und 21 eine große, einer Standardtastatur im wesentlichen entsprechenden Tastatur erzielt werden kann.

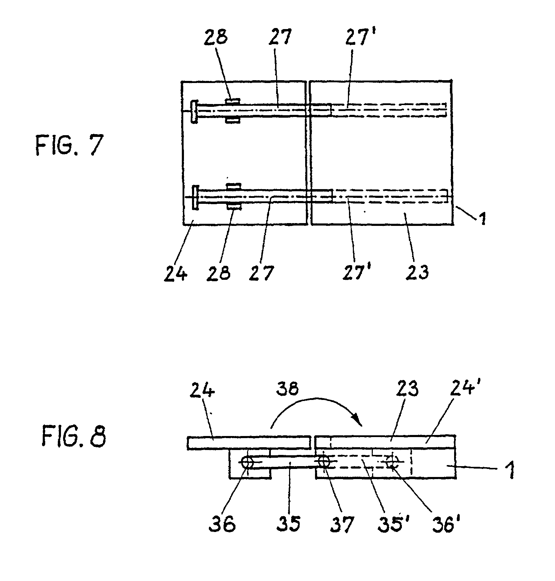

In Fig. 7 ist schematisch eine weitere Ausbildungsform einer Tastatur in vergrößerter Position dargestellt. Aus der Draufsicht gemäß Fig. 7 ist ersichtlich, daß die Trägerelemente 23 und 24 mittels zweier teleskopierbarer, stangenartiger Führungen 27 verbindbar sind, wobei das Trägerelement 24 mittels der beiden Steckverbindungen 28 auf die beiden darunterliegenden Führungen 27 aufgesteckt wird. Die beiden Führungen sind mit dem Gehäuse 1 verbunden, das sich unter dem Trägerelement 23 befindet. In der verkleinerten Position werden die beiden Führungen 27 in das Gehäuse 1 eingeschoben und nehmen die mit 27' bezeichnete Position ein. In dieser Ausführung können die beiden Führungen 27 und die Steckverbindungen 28 gleichzeitig die elektronische Verbindung zwischen den beiden Trägerelemente herstellen.

In Fig. 8 ist schematisch eine weitere Ausbildungsform einer Tastatur in vergrößerter Position dargestellt. Aus der Vorderansicht gemäß Fig. 8 ist ersichtlich, daß die beiden Trägerelemente 23 und 24 mittels eines in Richtung 38 drehbaren Hebels 35 verbunden sind. Der Hebel 35 ist über das Drehgelenk 36 mit dem Trägerelement 24 verbunden und über das Drehgelenk 37 mit dem Gehäuse 1 verbunden, welches mit dem Trägerelement 23 fix verbunden ist. Im verkleinerten Zustand befinden sich der Hebel, das Drehgelenk und das Trägerelement in den mit 35', 36' und 24' bezeichneten Positionen. Analog dazu befindet sich an der Geräterückseite ein zweiter drehbarer Hebel. Diese beiden Hebel stellen auch die elektronische Verbindung zwischen den beiden Trägerelementen her.

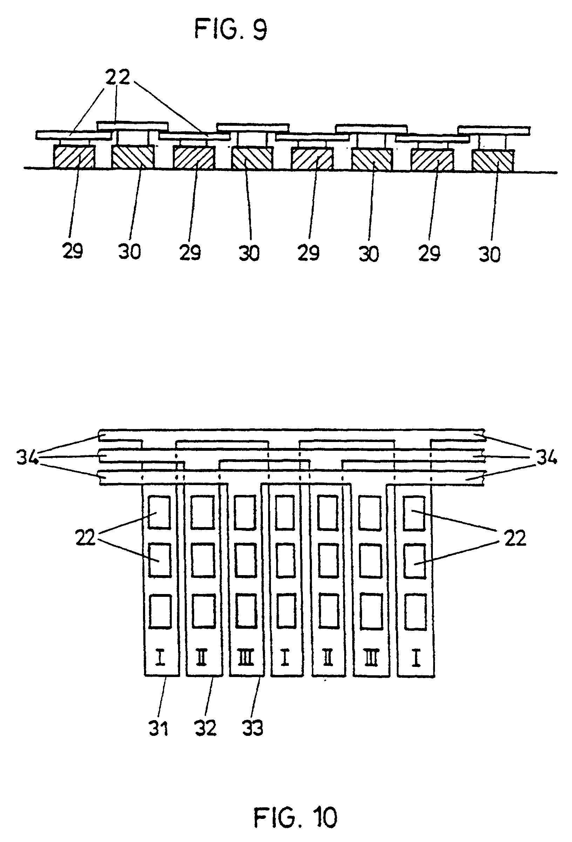

Bei der abgewandelten Ausbildung gemäß Fig. 9 ist ersichtlich, daß Supportteile, welche zu voneinander getrennten, zwei Trägerelementen 29 und 30 gehören, in der dargestellten, verkleinerten Transportposition derart ineinander verschachtelt sind, daß neben einer Spalte von Tasten 22 eines Transportelementes eine Spalte von Tasten 22 des anderen Trägerelementes zu liegen kommt. Bei dieser Ausführungsform sind hiebei lediglich die Abmessungen der Supportteile bzw. der Trägerelemente 29 bzw. 30 derart bemessen, daß in der verkleinerten Position eine Verschachtelung der Trägerelemente möglich wird, während, wie dies insbesondere aus Fig. 9 ersichtlich ist, die einzelnen Tasten 22 benachbarter, voneinander verschiedener Trägerelemente 29, 30 einander wenigstens teilweise überlappen. Da im Transportzustand die einander teilweise überlappenden Tasten 22 sich jedoch gegenseitig niederdrücken, ist'auch auf einer derartigen Ausbildung eine verkleinerte Transportstellung bei gleichbleibender Höhe der Tastatur erzielbar.

Bei der abgewandelten Ausführungsform gemäß Fig. 10 ist schematisch angedeutet, wie drei voneinander trennbare Trägerelemente 31, 32, 33 mit schematisch darauf angedeuteten Tasten 22 in der dargestellten, verkleinerten Transportposition derart ineinander verschachtelt werden, daß abwechselnd eine Taste bzw. eine Spalte von Tasten 22 des ersten, des zweiten sowie des dritten Trägerelementes zu liegen kommt, wie dies schematisch durch die Folge I, II, III angedeutet ist. Eine Kopplung über beispielsweise wiederum teleskopierbare Führungen ist hiebei schematisch mit 34 angedeutet. Bei der Ausführungsform gemäß Fig. 10 erfolgt somit eine vollkommene Verschachtelung der Trägerelemente 31, 32, 33 im Transportzustand ineinander, während beispielsweise im Gegensatz dazu bei der Ausführungsform gemäß Fig. 4 mehrere, an einem Grundelement festlegbare Trägerelemente in der verkleinerten Position einander nicht zusätzlich überlappen bzw. ineinander verschachtelt sind, sondern lediglich eine Verschachtelung mit dem Grundträgerelement erfolgt.

Bei den in den Figuren dargestellten Ausführungsbeispielen mit Ausnahme des Beispieles gemäß Fig. 9 kann hiebei, wie dies oben ausführlich erörtert wurde, durch entsprechende Sensoren, Kontakte oder Schalter sichergestellt werden, daß sowohl in der Transportstellung als auch in der ausgefahrenen Position der Tastatur durch lediglich einfache Umdefinierung der Belegung der einzelnen Tasten 22 ein Einsatz ermöglicht wird.

## Patentansprüche

1. Verkleinerbare Tastatur, insbesondere für elektronische Geräte, Computer, Klein-Computer, oder dergleichen, bestehend aus Trägerelementen (3, 4, 8, 9, 10, 13, 14, 16, 18, 20, 21, 23, 24, 29, 30, 31. 32, 33) für die einzelnen Tasten (22), wobei die Trägerelemente gegebenenfalls Rahmen- und/oder Bodenelemente umfassen und weiters Mittel zur Datenübertragung, zur Energieübertragung, zwischen den einzelnen Elementen, zur Tastatursteuerung und zur Kopplung mit dem elektronischen Gerät vorgesehen sind, wobei wenigstens zwei Trägerelemente (3, 4, 8, 9, 10, 13, 14, 16, 18, 20, 21, 23, 24, 29, 30, 31, 32, 33) mit Tasten (22) einzelner Spalten und/oder Zeilen der Tastatur vorgesehen sind, wobei in der vergrößerten Position die Belegung der einzelnen Tasten (22) jener einer Standard-Tastatur entspricht und wobei in der verkleinerten Position der Tastatur die Trägerelemente (3, 4, 8, 9, 10, 13, 14, 16, 18, 20, 21, 23, 24, 29, 30, 31, 32, 33) ineinander verschachtelbar sind, so daß auf unterschiedlichen Trägerelementen (3, 4, 8, 9, 10, 13, 14, 16, 18, 20, 21, 23, 24, 29, 30, 31, 32, 33) angeordnete Spalten und/oder Zeilen von Tasten (22) nebeneinander und/oder wenigstens teilweise überlappend angeordnet sind, **dadurch gekennzeichnet, daß** in der verkleinerten Position der Tastatur Tasten einer Zeile und/oder Spalte eines Trägerelementes gleichgerichtet zwischen zwei Tasten einer Zeile bzw. Spalte eines weiteren Trägerelementes positioniert sind.

2. Tastatur nach Anspruch 1, **dadurch gekennzeichnet, daß** die Trägerelemente (3, 4, 8, 9, 10, 13, 14, 16, 18, 20, 21, 23, 24, 29, 30, 31, 32, 33) miteinander gelenkig und/oder über Gelenkstangen und/oder über drehbare Hebel und/oder über eine ein teleskopierbares Element aufweisende Kopplung und/oder Steckverschlüsse verbindbar sind oder verbunden sind.

3. Tastatur nach Anspruch 1 oder 2, **dadurch gekennzeichnet, daß** wenigstens zwei Trägerelemente (3, 4, 13, 14, 23, 24, 31, 32, 33) vorgesehen sind, welche miteinander entlang ihrer Längsoder Breitseite über teleskopierbare, stangenartige Führungen (7) verbunden sind und aus der verkleinerten Position der Tastatur durch ein Verschwenken der Trägerelemente (3, 4, 13, 14, 23, 24, 31, 32, 33) relativ zueinander und ein Verschieben längs der Teleskopführungen (7) in die vergrößerte Position verlagerbar sind.

4. Tastatur nach Anspruch 1, 2 oder 3, **dadurch gekennzeichnet, daß** für die Kopplung der Trägerelemente (3, 4, 8, 9, 10, 13, 14, 16, 18, 20, 21, 23, 24, 29, 30, 31, 32, 33) im verkleinerten und/oder vergrößerten Zustand Feststellmechanismen, wie Steckverbindungen, Schnappverschlüsse, Stecker oder dgl., vorgesehen sind.

5. Tastatur nach Anspruch 4 **dadurch gekennzeichnet, daß** für die Kopplung der Trägerelemente (3, 4, 8, 9, 10, 13, 14, 16, 18, 20, 21, 23, 24, 29, 30, 31, 32, 33) im verkleinerten und/oder vergrößerten Zustand als Festellmechanismen ein- oder mehrpolige Stecker eingesetzt werden.

6. Tastatur nach einem der Ansprüche 1 bis 5, **dadurch geKennzeichnet, daß** wenigstens drei Trägerelemente (8, 9, 10) vorgesehen sind, wobei an einem ein Grundelement bildenden, ersten Trägerelement (8) wenigstens zwei weitere Trägerelemente (9, 10), deren Gesamtbreite maximal der Breite des Grundelements entspricht, angeordnet sind.

7. Tastatur nach einem der Ansprüche 1 bis 6, **dadurch gekennzeichnet, daß** die Trägerelemente (3, 4, 8, 9, 10, 13, 14, 16, 18, 20, 21, 23, 24, 29, 30, 31, 32, 33) für eine Energieund Signal- bzw. Datenübertagung miteinander, gegebenenfalls unter Zwischenschaltung von Steuerelementen, und/oder mit einer Steuereinheit gekoppelt sind.

8. Tastatur nach einem der Ansprüche 1 bis 7, **dadurch gekennzeichnet, daß** in Verbindungselementen oder Kopplungen (7, 27, 34, 35) der einzelnen Trägerelemente Einrichtungen zur Energie- und Signal- bzw. Datenübertragung integriert sind.

9. Tastatur nach einem der Ansprüche 1 bis 8, **dadurch gekennzeichnet, daß** die Trägerelemente (3, 4, 8, 9, 10, 13, 14, 16, 18, 20, 21, 23, 24, 29, 30, 31, 32, 33) über einen Sensor, Kontakt oder Schalter miteinander gekoppelt sind, welcher entsprechend der relativen Positionierung der Trägerelemente (3, 4, 8, 9, 10, 13, 14, 16, 18, 20, 21, 23, 24, 29, 30, 31, 32, 33) der Tastatur eine Umdefinierung der Belegung der einzelnen Tasten (22) bewirkt.

10. Tastatur nach einem der Ansprüche 1 bis 9, **dadurch gekennzeichnet, daß** die Tasten (22) jedes Trägerelements (3, 4, 8, 9, 10, 13, 14, 16, 18, 20, 21, 23, 24, 29, 30, 31, 32, 33) mittels Leiterbahnen oder Drähten mit einem auf dem Trägerelement (3, 4, 8, 9, 10, 13, 14, 16, 18, 20, 21, 23, 24, 29, 30, 31, 32, 33) angeordneten, insbesondere als Multiplexer arbeitenden Mikrokontroller, der die Zustände der Tasten (22) erfaßt und gegebenenfalls zwischenspeichert, verbunden sind und daß die Mikrokontroller jedes Trägerelementes (3, 4, 8, 9, 10, 13, 14, 16, 18, 20, 21, 23, 24, 29, 30, 31, 32, 33) insbesondere berührungslos an einen als Demultiplexer geschalteten, ortsfesten, zentralen Mikrokontroller angeschlossen sind, welcher über ein Interface an die Schnittstelle des Computers oder dgl. für die Tasteneingabe anschaltbar ist.

11. Tastatur nach einem der Ansprüche 1 bis 10, **dadurch gekennzeichnet, daß** die Abmessungen der einzelnen Tasten (22) bzw. Supportteile der Trägerelemente (3, 4, 8, 9, 10, 13, 14, 16, 18, 20, 21, 23, 24, 31, 32, 33) unter den Tasten (22) geringer sind als der durch die Anzahl der Trägerelemente dividierte Abstand zwischen den Mittelpunkten der Tasten (22) eines Trägerelementes.

12. Tastatur nach einem der Ansprüche 1 bis 11, **dadurch gekennzeichnet, daß** eines der Trägerelemente (4, 8, 13, 16, 23) fest mit einem Gehäuse für die Tastatur oder dem damit verbundenen Computer oder dgl. verbunden ist bzw. darin integriert ist.

## Claims

1. Reducible keyboard, in particular for electronic devices, computers, mini computer, or similar, consisting of support elements (3, 4, 8, 9, 10, 13, 14, 16, 18, 20, 21, 23, 24, 29, 30, 31, 32, 33) for the individual keys (22), whereby the support elements may comprise frame elements and/or base elements and in addition means are provided for data transmission, for energy transmission, between the individual elements, for controlling the keyboard and for connection with the electronic device, whereby at least two support elements (3, 4, 8, 9, 10, 13, 14, 16, 18, 20, 21, 23, 24, 29, 30, 31, 32, 33) fitted with keys (22) of individual columns and/or rows of the keyboard are provided, whereby in the enlarged position the assignment of the individual keys (22) corresponds to that of a standard keyboard and whereby in the reduced position of the keyboard the support elements (3, 4, 8, 9, 10, 13, 14, 16, 18, 20, 21, 23, 24, 29, 30, 31, 32, 33) can be interleaved with each other, such that columns and/or rows of keys (22) arranged on different support elements (3, 4, 8, 9, 10, 13, 14, 16, 18, 20, 21, 23, 24, 29, 30, 31, 32, 33) are arranged next to each other and/or at least partially overlapping, **characterised by** the fact that in the reduced position of the keyboard, keys of one row and/or column of one support element are positioned with the same alignment between two keys of a row or column of another support element.

2. Keyboard according to claim 1, **characterised by** the fact that the support elements (3, 4, 8, 9, 10, 13, 14, 16, 18, 20, 21, 23, 24, 29, 30, 31, 32, 33) can be or are linked with each other through articulation and/or via articulated rods and/or via rotating levers and/or via a coupling including a telescope element and/or plug-in closures.

3. Keyboard according to claim 1 or 2, **characterised by** the fact that at least two support elements (3, 4, 13, 14, 23, 24, 31, 32, 33) are provided, which are linked with each other along their longitudinal or broad sides via telescope rod-like guiding devices (7) and which can be shifted from the reduced position of the keyboard to the enlarged position by swivelling the support elements (3, 4, 13, 14, 23, 24, 31, 32, 33) relative to each other and shifting them along the telescope guiding elements (7).

4. Keyboard according to claim 1, 2 or 3, **characterised by** the fact that for the coupling of the support elements (3, 4, 8, 9, 10, 13, 14, 16, 18, 20, 21, 23, 24, 29, 30, 31, 32, 33) in the reduced and/or enlarged mode, fixing mechanisms, such as plug-in connections, snap closures, plugs or the like, are provided.

5. Keyboard according to claim 4, **characterised by** the fact that for the coupling of the support elements (3, 4, 8, 9, 10, 13, 14, 16, 18, 20, 21, 23, 24, 29, 30, 31, 32, 33) in the reduced and/or enlarged mode, single or multi-pole plugs are used as fixing mechanisms.

6. Keyboard according to one of the claims 1 to 5, **characterised by** the fact that at least three support elements (8, 9, 10) are provided, whereby at least two additional support elements (9, 10), the overall width of which corresponds at most with the width of the basic element, are arranged on a first support element (8) forming a basic element.

7. Keyboard according to one of the claims 1 to 6, **characterised by** the fact that the support elements (3, 4, 8, 9, 10, 13, 14, 16, 18, 20, 21, 23, 24, 29, 30, 31, 32, 33), are connected, if necessary with the interposition of control elements, with each other and/or with a controlling unit for energy and signal or data transfer, respectively.

8. Keyboard according to one of the claims 1 to 7, **characterised by** the fact that devices for energy and signal or data transfer, respectively, are integrated in the connecting elements or couplings (7, 27, 34, 35) of the individual support elements.

9. Keyboard according to one of the claims 1 to 8, **characterised by** the fact that the support elements (3, 4, 8, 9, 10, 13, 14, 16, 18, 20, 21, 23, 24, 29, 30, 31, 32, 33) are coupled with each other by a sensor, contact or switch, which causes a redefinition of the assignment of the individual keys (22) according to the relative position of the support elements (3, 4, 8, 9, 10, 13, 14, 16, 18, 20, 21, 23, 24, 29, 30, 31, 32, 33).

10. Keyboard according to one of the claims 1 to 9, **characterised by** the fact that the keys (22) of each support element (3, 4, 8, 9, 10, 13, 14, 16, 18, 20, 21, 23, 24, 29, 30, 31, 32, 33) are linked by means of strip conductors or wires with a microcontroller positioned on the support element (3, 4, 8, 9, 10, 13, 14, 16, 18, 20, 21, 23, 24, 29, 30, 31, 32, 33), which in particular works as a multiplexer and records the conditions of the keys (22) and, if necessary, temporarily stores them, and the fact that the microcontrollers of each support element (3, 4, 8, 9, 10, 13, 14, 16, 18, 20, 21, 23, 24, 29, 30, 31, 32, 33) are in particular connected contact-free to a fixed central microcontroller, which is switched as a demultiplexer and which can be connected via an interface at the computer interface or the like for the key input.

11. Keyboard according to one of the claims 1 to 10, **characterised by** the fact that the dimensions of the individual keys (22) or support parts of the support elements (3, 4, 8, 9, 10, 13, 14, 16, 18, 20, 21, 23, 24, 29, 30, 31, 32, 33) below the keys (22), respectively, are smaller than the distance between the centre points of the keys (22) of a support element divided by the number of support elements.

12. Keyboard according to one of the claims 1 to 11, **characterised by** the fact that one of the support elements (4, 8, 13, 16, 23) is fixedly connected to a casing for the keyboard or the computer connected to it, or similar, or is integrated within, respectively.

## Revendications

1. Clavier réductible, notamment pour appareils électroniques, ordinateurs, mini-ordinateurs, ou etc., composé d'éléments porteurs (3, 4, 8, 9, 10, 13, 14, 16, 18, 20, 21, 23, 24, 29, 30, 31, 32, 33) pour les différentes touches (22), les éléments porteurs englobant le cas échéant des éléments d'encadrement et/ou de fond, et des moyens étant prévus en outre pour la transmission des données, pour la transmission de l'énergie, entre les divers éléments, pour la commande du clavier et pour le couplage avec l'appareil électronique, deux éléments porteurs (3, 4, 8, 9, 10, 13, 14, 16, 18, 20, 21, 23, 24, 29, 30, 31, 32, 33) minimum étant prévus dotés de touches (22) de diverses colonnes et/ou lignes du clavier, l'affectation des diverses touches (22) en position agrandie correspondant à celle d'un clavier standard et en position réduite du clavier les éléments porteurs (3, 4, 8, 9, 10, 13, 14, 16, 18, 20, 21, 23, 24, 29, 30, 31, 32, 33) étant emboîtables de sorte que les colonnes et/ou lignes de touches (22) disposées sur les divers éléments porteurs (3, 4, 8, 9, 10, 13, 14, 16, 18, 20, 21, 23, 24, 29, 30, 31, 32, 33) soient juxtaposées et/ou se chevauchent du moins partiellement, **caractérisé en ce qu'**en position réduite du clavier, les touches d'une ligne et/ou d'une colonne d'un élément porteur sont positionnées dans le même sens entre deux touches d'une ligne ou d'une colonne d'un autre élément porteur.

2. Clavier selon la revendication 1 **caractérisé en ce que** les éléments porteurs(3, 4, 8, 9, 10, 13, 14, 16, 18, 20, 21, 23, 24, 29, 30, 31, 32, 33) sont reliables ou reliés les uns aux autres par articulation et/ou par des tiges articulées et/ou des leviers rotatifs et/ou par un accouplement présentant un élément télescopique et/ou des fermetures à fiche.

3. Clavier selon la revendication 1 ou 2 **caractérisé en ce qu'**au moins deux éléments porteurs (3, 4, 13, 14, 23, 24, 31, 32, 33) sont prévus lesquels sont reliés ensemble sur leur longueur ou leur largeur par des sortes de tiges de guidage télescopiques et peuvent passer de la position réduite du clavier dans la position agrandie par un basculement relatif des éléments porteurs (3, 4, 8, 9, 10, 13, 14, 16, 18, 20, 21, 23, 24, 29, 30, 31, 32, 33) les uns vers les autres et un déplacement le long des guidages télescopiques (7).

4. Clavier selon la revendication 1, 2 ou 3 **caractérisé en ce que** pour l'accouplement des éléments porteurs (3, 4, 8, 9, 10, 13, 14, 16, 18, 20, 21, 23, 24, 29, 30, 31, 32, 33) à l'état réduit et/ou agrandi des mécanismes de blocage sont prévus, tels que des connecteurs à fiche, des fermetures à déclic, des fiches ou autres dispositifs de ce type.

5. Clavier selon la revendication 4 **caractérisé en ce que** pour l'accouplement des éléments porteurs (3, 4, 8, 9, 10, 13, 14, 16, 18, 20, 21, 23, 24, 29, 30, 31, 32, 33) à l'état réduit et/ou agrandi des fiches unipolaires ou bipolaires sont utilisées comme mécanismes de blocage.

6. Clavier selon une des revendications 1 à 5 **caractérisé en ce qu'**au moins trois éléments porteurs (8, 9, 10) sont prévus dont au moins deux (9, 10) sont placés sur un premier élément porteur (8) formant un élément de base, leur largeur totale correspondant au maximum à la largeur de l'élément de base.

7. Clavier selon une des revendications 1 à 6 **caractérisé en ce que** les éléments porteurs (3, 4, 8, 9, 10, 13, 14, 16, 18, 20, 21, 23, 24, 29, 30, 31, 32, 33) sont couplés les uns aux autres et/ou avec une unité de commande pour une transmission de l'energie et du signal, voire des données, en intercalant le cas échéant des éléments de commande.

8. Clavier selon une des revendications 1 à 7 **caractérisé en ce que** des installations pour la transmission de l'energie, du signal voire des données sont integrées dans les éléments de connexion ou des accouplements (7,27, 34, 35) des divers éléments porteurs.

9. Clavier selon une des revendications 1 à 8 **caractérisé en ce que** les éléments porteurs (3, 4, 8, 9, 10, 13, 14, 16, 18, 20, 21, 23, 24, 29, 30, 31, 32, 33) sont couplés les uns aux autres par un capteur, un contact ou un commutateur, lequel induit une redéfinition de l'affectation des différentes touches (22) qui correspond au positionnement relatif des éléments porteurs (3, 4, 8, 9, 10, 13, 14, 16, 18, 20, 21, 23, 24, 29, 30, 31, 32, 33) du clavier.

10. Clavier selon une des revendications 1 à 9 **caractérisé en ce que** les touches (22) de chaque élément porteur (3, 4, 8, 9, 10, 13, 14, 16, 18, 20, 21, 23, 24, 29, 30, 31, 32, 33) sont reliées au moyen de pistes conductives ou de fils métalliques avec un microcontrôleur, travaillant notamment comme un multiplexeur, lequel, placé sur l'élément porteur, (3, 4, 8, 9, 10, 13, 14, 16, 18, 20, 21, 23, 24, 29, 30, 31, 32, 33), saisit les états des touches (22) et les mémorise temporairement le cas échéant, et **en ce que** les microcontrôleurs de chaque élément porteur (3, 4, 8, 9, 10, 13, 14, 16, 18, 20, 21, 23, 24, 29, 30, 31, 32, 33) sont connectés notamment sans contact à un microcontrôleur central fixe monté comme démultiplexeur, lequel peut être branché via une interface sur l'interface de l'ordinateur ou sur un autre dispositif de ce type pour l'introduction de données par les touches.

11. Clavier selon une des revendications 1 à 10 **caractérisé en ce que** les dimensions des diverses touches (22) voire des supports des éléments porteurs(3,4,8,9,10,13,14,16,18,20,21, 23, 24, 29, 30, 31, 32, 33) sous les touches (22) sont inférieures à l'écart entre les points centraux des touches (22) d'un élément porteur divisé par le nombre des éléments porteurs.

12. Clavier selon une des revendications 1 à 11 **caractérisé en ce que** l'un des éléments porteurs (4, 8, 13, 16, 23) est relié fixement avec le boîtier du clavier, avec l'ordinateur étant relié avec lui ou avec un autre dispositif de ce type, voire y est integré.
